# NEUE EUROPÄISCHE PATENTSCHRIFT

(11) **EP 3 319 796 B2**
(45) Veröffentlichungstag und Bekanntmachung des Hinweises auf die Entscheidung über den Einspruch: **26.08.2026**
(45) Hinweis auf die Patenterteilung: 11.05.2022
(21) Anmeldenummer: 16733993.6
(22) Anmeldetag: 04.07.2016
(51) Int. Cl.: B32B 27/00, B32B 27/06, B32B 27/08, B32B 27/18, B32B 27/22, B32B 27/30, B32B 7/00, B32B 7/02, B32B 7/12

(54) **MEHRSCHICHTIGE FOLIE UND GEBÄUDEFASSADENELEMENT MIT EINER BESCHICHTUNG AUS DER MEHRSCHICHTIGEN FOLIE**
MULTI-LAYERED FILM AND BUILDING FACADE ELEMENT HAVING A COATING MADE OF A MULTI-LAYERED FILM
FEUILLE MULTICOUCHE ET ÉLÉMENT DE FAÇADE DE BÂTIMENT POURVU D'UN REVÊTEMENT CONSTITUÉ DE CETTE FEUILLE MULTICOUCHE

(30) Priorität: 06.07.2015 AT 501402015
(43) Veröffentlichungstag der Anmeldung: 16.05.2018
(73) Patentinhaber: Konrad Hornschuch AG, 74679 Weissbach (DE)
(72) Erfinder: MAYER, Sabine, 74613 Öhringen (DE); KNIERIM, Marion, 74635 Kupferzell (DE); ALBRECHT, Astrid, 74354 Besigheim (DE)
(74) Vertreter: Held, Stephan
(86) Internationale Anmeldenummer: PCT/EP2016/065674
(87) Internationale Veröffentlichungsnummer: WO 2017/005681

(56) Entgegenhaltungen:
- DE-A1- 4 032 139
- DE-A1- 4 032 139
- JP-A- H1 084 788
- US-A1- 2014 287 204

## Beschreibung

Die vorliegende Erfindung betrifft eine mehrschichtige Folie, die eine Deckschicht mit einem UV-Schutz und eine Grundschicht auf der Basis von Polyvinylchlorid (PVC) aufweist. Sie betrifft weiter ein Gebäudefassadenelement, insbesondere ein Fensterprofil, mit einer Beschichtung aus der Folie.

Derartige Folien sind bekannt, beispielsweise in der Form von Folien zur Beschichtung von der Sonnenstrahlung und anderen Witterungseinflüssen ausgesetzten Oberflächen wie Fensterprofilen, Garagentoren, Türfüllungen, Fassadenteilen etc. Sie sollen eine hohe Lebensdauer aufweisen und trotz Belastung durch Sonnenlicht (dabei hauptsächlich der UV-Anteil mit einer Wellenlänge zwischen 300-400nm), Temperatur und andere Witterungseinflüsse ohne nennenswerte Verfärbung und Veränderung fest mit dem Untergrund verbunden bleiben. Um für die Applikation flexible PVC-Folien zu erreichen, werden üblicherweise äußere Weichmacher eingesetzt. Eine Migration des Weichmachers kann jedoch zu einer Spannungsrissbildung in der acrylischen Deckfolie und möglicherweise eine Verminderung des T_{g} derselben führen, was eine Veränderung des Verhaltens gegenüber Migrationsprozesse zur Folge hat und die Lebensdauer des Produktes herab setzt.

Auch besteht die Möglichkeit, dass sich der Weichmacher, durch bestimmte Umgebungsbedingungen begünstigt, durch Migration an der unteren Grenzfläche der PVC-Folie anreichert und Verklebungen dadurch negativ beeinflusst werden könnten. US2014/0287204 A1 beschreibt eine mehrschichtige Folie, die eine Deckschicht mit einem UV-Schutz und eine Grundschicht auf der Basis von einem Polyacrylat/Polyvinylchlorid Copolymer aufweist.

Es ist eine Aufgabe der vorliegenden Erfindung, eine Folie der eingangs genannten Art anzugeben, bei der das Problem der Migration des Weichmachers und deren Auswirkungen gelöst wird.

Diese Aufgabe wird gelöst durch den Gegenstand des unabhängigen Schutzanspruchs. Weitere Ausführungsformen und Einzelheiten der Erfindung sind Gegenstand der Unteransprüche.

Gemäß einem Aspekt der Erfindung wird eine mehrschichtige Folie angegeben, die eine Grundschicht auf der Basis von einen Weichmacher enthaltendem Polyvinylchlorid (PVC) und eine haftfest mit der Grundschicht verbundene, einen UV-Stabilisator enthaltende Deckschicht umfasst. Als weich- und flexibelmachende Komponente wird in der Grundschicht ein PVC-freies Copolymer auf Basis von Acrylaten eingesetzt.

Neben der Grundschicht und der Deckschicht kann die Folie auch weitere Schichten aufweisen. Typischerweise, aber nicht zwingend, ist die Deckschicht transparent.

Der Einsatz eines PVC-freien acrylischen Copolymers als weichmachende Rezepturkomponente, wie es beispielswiese im Handel erhältlich ist als Kane Ace CSR3, hat den Vorteil, dass eine Migration des Weichmachers verhindert wird. Wie experimentell gezeigt werden konnte, finden bei der erfindungsgemäßen mehrschichtigen Folie auch nach einer Bestrahlungsdauer von über 26 000 Stunden und einer Dosis von über 50 000 MJ/m² keine Beeinträchtigung oder Zerstörung der Deckschicht und kein Abbau von PVC statt. Im Gegensatz dazu kam es bei bekannten Folien nach 17 000 Stunden und einer Bestrahlungsdosis von 33 320 MJ/m² zum Abbau von PVC und zu einer Zerstörung der Deckschicht.

Demnach werden die bislang üblichen, äußeren Weichmacher durch flexible, polymere Weichmacher auf Acrylatbasis ersetzt, wodurch sich eine Reduktion der Migration des Weichmachers und damit eine deutlich verlängerte Lebensdauer der mehrschichtigen Folie, insbesondere in der Außenanwendung, ergibt.

Gemäß einer Ausführungsform der Erfindung weist die Grundschicht einen Anteil a an PVC auf mit 30 % ≤ a ≤ 80 %. Der Anteil b des PVC-freien Copolymers auf Basis von Acrylaten beträgt in der Grundschicht 20 % ≤ b ≤ 50 %.

Die Grundschicht kann darüber hinaus einen Anteil c eines Thermostabilisators aufweisen mit 1 % ≤ c ≤ 5 %.

In einer Ausführungsform der Erfindung ist die Deckschicht als UV-Schutzfolie auf Acrylatbasis ausgebildet. Ihre Dicke kann beispielsweise zwischen 30 Mikrometern und 100 Mikrometern betragen.

Die Deckschicht kann alternativ auch als PMMA/PVDF-Folie (Polymethylmethacrylat- und/oder Polyvinylidenfluorid-Folie) ausgebildet sein.

Eine weitere Alternative ist der Einsatz eines Lacks auf Acrylatbasis mit UV-Absorbern als Deckschicht.

Für die Verwirklichung des UV-Schutzes durch die UV-Stabilisatoren gibt es verschiedene Möglichkeiten. Gemäß einer Ausführungsform der Erfindung weist die Deckschicht UV-Absorber auf mit einem Anteil d mit 0,2 % ≤ d ≤ 3 %.

Alternativ oder zusätzlich kann die Deckschicht sterisch gehinderte Amine (engl. Hindered Amine Light Stabilizer, HALS) als UV-Stabilisatoren aufweisen mit einem Anteil e mit 0,2 % ≤ e ≤ 3 %. Dabei können verschiedene HALS-Typen kombiniert werden.

Gemäß einer Ausführungsform weist die Grundschicht und/oder die Deckschicht phenolische und/oder phosphithaltige Co-Stabilisatoren auf. Beispielsweise kann organisches Phosphit mit einem Anteil zwischen 0,2% und 1 % als Co-Stabilisator eingesetzt werden.

In einer Ausführungsform der Erfindung sind die Grundschicht und die Deckschicht thermisch laminiert und bilden einen Verbund. Die mehrschichtige Folie kann so im Ganzen weiterverarbeitet und beispielsweise zur Beschichtung von Oberflächen eingesetzt werden.

Gemäß einer Ausführungsform der Erfindung ist die Grundschicht bedruckt und/oder eingefärbt mit witterungsbeständigen organischen oder anorganischen Pigmenten. Alternativ oder zusätzlich kann auch die Deckschicht geprägt sein. Dadurch lassen sich Dekorfolien beispielsweise in Holzoptik gestalten.

Die Herstellung der Grundschicht erfolgt bevorzugt durch Kalandrieren. Ein Bedrucken der Grundschicht kann beispielsweise im Tiefdruckverfahren erfolgen. Durch thermisches Laminieren kann die Grundschicht mit einer Deckschicht auf PMMA-Basis verbunden werden, anschließend kann eine Struktur/Narbe eingebracht werden.

Eine transparente Deckfolie auf Acrylatbasis kann mit verschiedenen UV-Absorbern und HALS-Typen im Extrusionsverfahren hergestellt werden.

Gemäß einem weiteren Aspekt der Erfindung wird ein Gebäudefassadenelement mit einer Beschichtung aus der mehrschichtigen Folie angegeben. Bei dem Gebäudefassadenelement kann es sich um einen Bereich einer Außenfassade handeln, um eine Türfüllung, um ein Garagentor, um Paneele oder um Vorsatzschalen. Das Gebäudefassadenelement ist somit farbbeständig und pflegeleicht.

Die Verarbeitung der Folie zu einer Beschichtung erfolgt beispielsweise durch Profil-ummantelung, Coil-Coating, 2D-Flächenkaschierung (Warm- und Kaltverklebung) oder Plattenextrusion mit thermischer Kaschierung der Folie.

Insbesondere wird die mehrschichtige Folie zur Beschichtung von Fensterprofilen eingesetzt. Insbesondere Kunststofffensterrahmen können durch den Einsatz der mehrschichtigen Folie als Beschichtung eine hochwertige Optik bei gleichzeitig hervorragender Haltbarkeit erhalten.

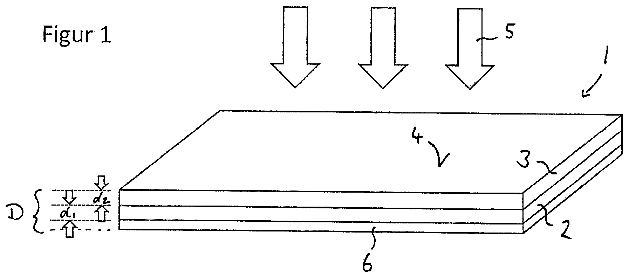

Ausführungsformen der Erfindung werden im Folgenden anhand einer Figur näher beschrieben. Darin zeigt die einzige Figur schematisch eine mehrschichtige Folie gemäß einer Ausführungsform der Erfindung.

Die mehrschichtige Folie 1 weist in der gezeigten Ausführungsform eine Grundschicht 2 auf der Basis von Polyvinylchlorid (PVC) auf, die einen Weichmacher enthält. Als Weichmacher ist ein PVC-freies Copolymer auf Basis von Acrylaten eingesetzt. Die Grundschicht 2 hat eine Dicke d₁ von 120 Mikrometern. Die Dicke d₁ kann beispielsweise zwischen 70 und 300 Mikrometern betragen.

Auf der nicht gezeigten Oberseite der Grundschicht 2 ist eine Deckschicht 3 angeordnet und haftfest mit dieser verbunden. Sie kann als Acrylatfolie, als PMMA/PVDF-Folie oder als Lack, z.B. auf Acrylatbasis ausgebildet sein. Die Deckschicht 3 hat bei Ausführung als eine Dicke d₂ von 50 Mikrometern. d₂ kann beispielsweise zwischen 30 und 100 Mikrometern betragen. Bei Ausführung der Deckschicht 3 als Lackschicht liegt die Dicke d₂ bei 3 bis 10 Mikrometern.

Die Oberseite 4 der Deckschicht 3 bildet die Oberseite der Folie 1. Sie kann somit unmittelbarer Sonneneinstrahlung, die durch die Pfeile 5 angedeutet ist, ausgesetzt sein. Die Deckschicht 3 weist daher UV-Stabilisatoren auf, die die Lichtbeständigkeit der Folie 1 erhöhen.

Die Grundschicht 2 kann auf ihrer Unterseite in der gezeigten Ausführungsform eine Haftvermittlerschicht 6 aufweisen. Die Haftvermittlerschicht 6 dient dazu, die Folie 1 auf eine zu beschichtende Oberfläche, beispielsweise ein Fensterprofil, aufzubringen und dauerhaft mit dieser zu verbinden.

Die Folie 1 weist insgesamt eine Dicke D auf, die mindestens der Summe aus d₁ und d₂ entspricht und die im gezeigten Ausführungsbeispiel bei 210

Mikrometern liegt. Grundsätzlich kann D beispielsweise zwischen 100 und 400 Mikrometern betragen.

Die Zusammensetzung der Folie 1 ist in Tabelle 1 angegeben. Teilweise sind hinter den das konkrete Beispiel betreffenden Mengenangaben in Klammern die vorteilhaften Bereiche angegeben.

**Tabelle 1**

| Rohstoff | Anteil | in % |
|---|---|---|
| PVC | 52,5 (30-80) | |
| acrylisches Copolymer (PVC-frei, dient als Weichmacher) | 35 (20-50) | |
| Thermo-Stabilisator | | 2,6 |
| Lichtschutz, bestehend aus | | 0,9 |
| Absorber | | 0,45 (0,2-3) |
| NOR-HALS | | 0,45 (0,2-3) |
| Co-Stabilisator | | |
| organisches Phosphit | | 0,4 (0,2-1) |
| Acryl. Prozesshilfsmittel | | 0,6 |
| Epoxidiertes Sojabohnenöl Acrylische Gleitmittel | | 6,9 |
| +TiO₂/Pigmente (zusätzl. zugesetzt) | | +15 |

### Bezugszeichenliste

- 1: mehrschichtige Folie
- 2: Grundschicht
- 3: Deckschicht
- 4: Oberseite
- 5: Pfeil
- 6: Haftvermittlerschicht

- d₁: Dicke
- d₂: Dicke
- D: Dicke

## Patentansprüche

1. Mehrschichtige Folie (1), umfassend
- eine Grundschicht (2) auf der Basis von einen Weichmacher enthaltendem Polyvinylchlorid (PVC),
- eine haftfest mit der Grundschicht (2) verbundene, einen UV- Stabilisator enthaltende Deckschicht (3),
**dadurch gekennzeichnet, dass**
als Weichmacher in der Grundschicht (2) ein PVC-freies Copolymer auf Basis von Acrylaten eingesetzt ist und dass die Grundschicht (2) einen Anteil b des PVC-freien Copolymers auf Basis von Acrylaten aufweist mit 20 % ≤ b ≤ 50 %.

2. Mehrschichtige Folie (1) nach Anspruch 1,
**dadurch gekennzeichnet, dass** die Grundschicht (2) einen Anteil a an PVC aufweist mit 30 % ≤ a ≤ 80 %.

3. Mehrschichtige Folie (1) nach einem der Ansprüche 1 oder 2,
**dadurch gekennzeichnet, dass** die Grundschicht (2) einen Anteil c eines Thermostabilisators aufweist mit 1 % ≤ c ≤ 5 %.

4. Mehrschichtige Folie (1) nach einem der Ansprüche 1 bis 3,
**dadurch gekennzeichnet, dass** die Deckschicht (3) als UV-Schutzfolie auf Acrylatbasis ausgebildet ist.

5. Mehrschichtige Folie (1) nach einem der Ansprüche 1 bis 3, **dadurch gekennzeichnet, dass** die Deckschicht (3) als PMMA/PVDF- Folie ausgebildet ist.

6. Mehrschichtige Folie (1) nach einem der Ansprüche 1 bis 3,
**dadurch gekennzeichnet, dass** die Deckschicht (3) als Lack auf Acrylatbasis mit UV-Absorbern ausgebildet ist.

7. Mehrschichtige Folie (1) nach einem der Ansprüche 1 bis 6,
**dadurch gekennzeichnet, dass** die Deckschicht (3) UV-Absorber aufweist mit einem Anteil d mit 0,2 % ≤ d ≤ 3 %.

8. Mehrschichtige Folie (1) nach einem der Ansprüche 1 bis 7,
**dadurch gekennzeichnet, dass** die Deckschicht (3) sterisch gehinderte Amine (engl. Hindered Amine Light Stabilizer, HALS) als Lichtschutz aufweist mit einem Anteil e mit 0,2 % ≤ e ≤ 3 %.

9. Mehrschichtige Folie (1) nach einem der Ansprüche 1 bis 8,
**dadurch gekennzeichnet, dass** die Grundschicht (2) und/oder die Deckschicht (3) phenolische und/oder phosphithaltige Co-Stabilisatoren aufweist.

10. Mehrschichtige Folie (1) nach einem der Ansprüche 1 bis 9,
**dadurch gekennzeichnet, dass** die Grundschicht (2) und die Deckschicht (3) thermisch laminiert sind und einen Verbund bilden.

11. Mehrschichtige Folie (1) nach einem der Ansprüche 1 bis 10,
**dadurch gekennzeichnet, dass** die Grundschicht (2) bedruckt und/oder eingefärbt ist.

12. Mehrschichtige Folie (1) nach einem der Ansprüche 1 bis 11,
**dadurch gekennzeichnet, dass** die Deckschicht (3) geprägt ist.

13. Gebäudefassadenelement mit einer Beschichtung aus der mehrschichtigen Folie (1) nach einem der Ansprüche 1 bis 12.

14. Gebäudefassadenelement nach Anspruch 13, das als Fensterprofil ausgebildet ist.

## Claims

1. Multilayer film (1) comprising
- a base layer (2) based on polyvinyl chloride (PVC) which comprises a plasticizer,
- securely adhering to the base layer (2), an outer layer (3) comprising a UV stabilizer,
**characterized in that**
a PVC-free copolymer based on acrylates is used as plasticizer in the base layer (2) and that the proportion b of the PVC- free copolymer based on acrylates in the base layer (2) complies with 20% ≤ b ≤ 50%.

2. Multilayer film (1) according to Claim 1, **characterized in that** the proportion a of PVC in the base layer (2) complies with 30% ≤ a ≤ 80%.

3. Multilayer film (1) according to any of Claims 1 or 2, **characterized in that** the proportion c of a heat stabilizer in the base layer (2) complies with 1% ≤ c ≤ 5%.

4. Multilayer film (1) according to any of Claims 1 to 3, **characterized in that** the outer layer (3) is configured as UV-protection film based on acrylate.

5. Multilayer film (1) according to any of Claims 1 to 3, **characterized in that** the outer layer (3) is configured as PMMA/PVDF film.

6. Multilayer film (1) according to any of Claims 1 to 3, **characterized in that** the outer layer (3) is configured as lacquer based on acrylate with UV absorbers.

7. Multilayer film (1) according to any of Claims 1 to 6, **characterized in that** the proportion d of UV absorber in the outer layer (3) complies with 0.2% ≤ d ≤ 3%.

8. Multilayer film (1) according to any of Claims 1 to 7, **characterized in that** the proportion e of sterically hindered amines (hindered amine light stabilizers, HALS) as light stabilizers in the outer layer (3) complies with 0.2% ≤ e ≤ 3%.

9. Multilayer film (1) according to any of Claims 1 to 8, **characterized in that** the base layer (2) and/or the outer layer (3) comprise(s) phenolic and/or phosphite-containing co-stabilizers.

10. Multilayer film (1) according to any of Claims 1 to 9, **characterized in that** the base layer (2) and the outer layer (3) have been thermally laminated and form a composite.

11. Multilayer film (1) according to any of Claims 1 to 10,
**characterized in that** the base layer (2) has been printed and/or pigmented.

12. Multilayer film (1) according to any of Claims 1 to 11, **characterized in that** the outer layer (3) has been embossed.

13. Building-facade element with a coating made of the multilayer film (1) according to any of Claims 1 to 12.

14. Building-facade element according to Claim 13 which is configured as window profile.

## Revendications

1. Feuille multicouche (1), comprenant
- une couche de fond (2) à base de polychlorure de vinyle (PVC) contenant un plastifiant,
- une couche de recouvrement (3) reliée de manière adhérente à la couche de fond (2), contenant un stabilisateur UV,
**caractérisée en ce**
**qu'**un copolymère à base d'acrylates exempt de PVC est utilisé en tant que plastifiant dans la couche de fond (2) et que la couche de fond (2) comprend une proportion b du copolymère à base d'acrylates exempt de PVC avec 20 % ≤ b ≤ 50 %.

2. Feuille multicouche (1) selon la revendication 1,
**caractérisée en ce que** la couche de fond (2) comprend une proportion a de PVC avec 30 % ≤ a ≤ 80 %.

3. Feuille multicouche (1) selon l'une quelconque des revendications 1 ou 2,
**caractérisée en ce que** la couche de fond (2) comprend une proportion c d'un thermostabilisateur avec 1 % ≤ c ≤ 5 %.

4. Feuille multicouche (1) selon l'une quelconque des revendications 1 à 3, **caractérisée en ce que** la couche de recouvrement (3) est configurée sous la forme d'une feuille de protection contre les UV
à base d'acrylates.

5. Feuille multicouche (1) selon l'une quelconque des revendications 1 à 3,
**caractérisée en ce que** la couche de recouvrement (3) est configurée sous la forme d'une feuille PMMA/PVDF.

6. Feuille multicouche (1) selon l'une quelconque des revendications 1 à 3,
**caractérisée en ce que** la couche de recouvrement (3) est configurée sous la forme d'une peinture
à base d'acrylates avec absorbeurs d'UV.

7. Feuille multicouche (1) selon l'une quelconque des revendications 1 à 6,
**caractérisée en ce que** la couche de recouvrement (3) comprend un absorbeur d'UV avec une proportion d de 0,2 % ≤ d ≤ 3 %.

8. Feuille multicouche (1) selon l'une quelconque des revendications 1 à 7,
**caractérisée en ce que** la couche de recouvrement (3) comprend des amines à encombrement stérique (en anglais Hindered Amine Light Stabilizer, HALS) comme protection contre la lumière avec une proportion e de 0,2 % ≤ e ≤ 3 %.

9. Feuille multicouche (1) selon l'une quelconque des revendications 1 à 8,
**caractérisée en ce que** la couche de fond (2) et/ou la
couche de recouvrement (3) comprend des co-stabilisants phénoliques et/ou contenant des phosphites.

10. Feuille multicouche (1) selon l'une quelconque des revendications 1 à 9,
**caractérisée en ce que** la couche de fond (2) et la couche de recouvrement (3) sont laminées thermiquement et forment un composé.

11. Feuille multicouche (1) selon l'une quelconque des revendications 1 à 10,
**caractérisée en ce que** la couche de fond (2) est imprimée et/ou encrée.

12. Feuille multicouche (1) selon l'une quelconque des revendications 1 à 11,
**caractérisée en ce que** la couche de recouvrement (3) est estampée.

13. Élément de façade de bâtiment avec un revêtement composé de la feuille multicouche (1) selon l'une quelconque des revendications 1 à 12.

14. Élément de façade de bâtiment selon la revendication 13, qui est configuré sous la forme d'un profilé de fenêtre.
